# EUROPEAN PATENT APPLICATION

(11) **EP 1 878 762 A1**
(43) Date of publication of application: **16.01.2008**
(21) Application number: 06017792.0
(22) Date of filing: 11.07.2006
(51) Int. Cl.: C08K 5/00, C08K 5/07, C08L 101/00

(54) **Oxidisable polymer**

(71) Applicant: DSM IP Assets B.V., 6411 TE Heerlen (NL)
(72) Inventor: Gijsman, Pieter, 6191 NM Beek (NL); Jansen, Johan Franz Gradus Antonius, 6165 AP Geleen (NL)
(74) Representative: Scheltus, Irma

(57) **Abstract**

The present invention relates to a composition containing an oxidisable carbon-containing component, wherein the composition further contains a vicinal dioxygen containing component. In one embodiment of the invention, the vicinal dioxygen containing component contains at least one 1,2-dioxo-moiety. In another embodiment of the invention, the vicinal dioxygen containing component contains at least one 1,2-oxo-hydroxy moiety. The present invention further relates to the use of the composition for the preparation of food packaging, bags, bottles, boxes, containers, cups, plastic drink holders and trays, films, cutlery, drinking straws, agricultural films, landfill cover, medical and hygienic products.

## Description

The present invention relates to polymer compositions containing a carbon-containing component that biodegrade in a controlled way in the environment primarily by an oxidative mechanism, where the degradation time is controlled by the incorporation of an oxidation catalyst in the composition. The oxidation catalyst accelerates the oxygen-uptake. The present invention also relates to a method for increasing the biodegradability of a carbon-containing component. The present invention further relates to the use of such a composition for the preparation of a product having a controlled lifetime.

It is known to add to polymers substances that promote their degradation so that they disintegrate and subsequently biodegrade in the environment. A number of applications of these systems have become important in recent years in order to reduce the amount of plastics wastes being buried in landfill and to return carbon-based polymers to the biological cycle in the form of compost or after degradation by spreading on land. One important application of biodegradable plastics is in short-term applications (e.g. food packaging and landfill covers), where the product lifetime has to be just long enough to provide the appropriate shelf life and the service life required by the user of the product. This requirement has been achieved by the use of transition metal ions which promote oxidation and thus disintegration of the carbon-containing polymer. A disadvantage of using transition metal catalysts for accelerating the oxygen uptake is that it will be unavoidable that part of the transition metal will be causing environmental pollution. Needless to say that this is not desirable.

There is, thus, need for alternative oxidation catalysts with less environmental effects.

Aim of the invention is a composition containing an oxidisable carbon-containing component wherein the presence of a transition metal catalyst is not necessary.

This aim is achieved in that the composition further contains a vicinal dioxygen containing component.

It has surprisingly been found that the vicinal dioxygen containing component is an alternative for a transition metal catalyst. In addition, it has been found that the use of some of said vicinal dioxygen containing components even results in that the biodegradability of the composition is more efficient.

In one embodiment of the invention, the vicinal dioxygen containing component contains at least one 1,2-dioxo-moiety. Preferably, the vicinal dioxygen containing component contains at least one 1,2-dioxo-moiety according to formula I 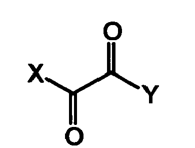 with X and Y being identical or different from each other, and representing respectively: X, Y: OR, SR, NR₁R₂, R, O⁻M⁺; in which
R, R₁, R₂: a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group;
M⁺ being a cation
and wherein X and Y may be joint together to form a vicinal dioxo cyclic structure of at least 5 carbon atoms,
and/or with any of X or Y representing an oligomeric or polymeric residue, which can optionally be substituted.

Preferably, X and/or Y being R. More preferably, X and Y being R. Even more preferably, X or Y being an optionally substitiuted C₆-C₂₀ aryl group or an optionally substituted C₇-C₂₀ arylalkyl group; or X is an optionally substituted C₁-C₂₀ alkyl group and Y is an optionally substituted C₆-C₂₀ aryl group. In another preferred embodiment, X is OH or an optionally substituted O-C₁-C₂₀ alkyl group and Y is an optionally substituted C₆-C₂₀ aryl group. In still another preferred embodiment of the invention, X and/or Y is an O⁻M⁺, with M⁺ representing an alkaline metal or earth alkaline metal cation, or an ammonium ion.

In another embodiment of the invention, the vicinal dioxygen containing component contains at least one 1,2-oxo-hydroxy-moiety. Preferably, the vicinal dioxygen containing component contains at least one 1,2-oxo-hydroxy-moiety according to formula II 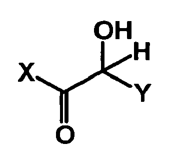 with X and Y being identical or different from each other, and representing respectively: X: OR, SR, NR₁R₂, R, O⁻M⁺ ; Y: OR, SR, NR₁R₂, R;
R, R₁, R₂ : a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or a polymeric residue, which can optionally be substituted.

Preferably, X being R. More preferably, X and/or Y being an optionally substitiuted C₆-C₂₀ aryl group or an optionally substituted C₇-C₂₀ arylalkyl group; or X is an optionally substituted C₁-C₂₀ alkyl group and Y is an optionally substituted C₆-C₂₀ aryl group. In another preferred embodiment, X is OH. In another preferred embodiment, X is an optionally substituted O-C₁-C₂₀ alkyl group and Y is an optionally substituted C₆-C₂₀ aryl group. In still another preferred embodiment of the invention, X is an O⁻M⁺, with M⁺ representing an alkaline metal or earth alkaline metal cation, or an ammonium ion. In case the vicinal dioxygen containing component is citric acid or tartaric acid, the composition is preferably essentially free of transition metals, most preferably free of transition metal. In case the vicinal dioxygen containing component contains a 1,2-oxo-hydroxy-moiety according to formula II with X is OH, the composition is preferably essentially free of transition metals, most preferably free of transition metal. Essentially free of transition metals means that the transition metal concentration is lower than 10 ppm, preferably lower than 5 ppm and even more preferably lower than 1 ppm, calculated on the total weight of the composition

Examples of substituents are, for instance, groups such as halogens, amines groups, alcohols, ethers, esters, ketones, aldehydes, polyalkyleneoxy residues, carboxylates, anhydrides, amides, ureas, urethanes, etc. Examples of polymeric residues are, for instance, polyethylene, polypropylene, polystyrene, polyethylene oxides, polypropylene oxides, polycarbonates, polyurethanes, polyesters, etc.

Preferably, from a processability point of view, the composition of the present invention contains a vicinal dioxygen containing component with a molecular weight of at least 200, preferably at least 500.

Examples of vicinal dioxygen containing components containing at least one 1,2 dioxo-moiety according to formula I that can suitably employed in the compositions according to the invention are, not limitative: 2,3-butanedione, 2,3-pentanedione, 2,3-hexanedione, 3,4-hexanedione, 2,3-heptanedione, 1-phenyl propanedione pyruvic aldehyde, pyruvic acid,methylpyruvate, ethylpyruvate camphorquinone, diacetone keto gulonic acid.

Examples of vicinal dioxygen containing components containing at least one 1,2 oxo-hydroxy moiety according to formula II that can suitably employed in the compositions according to the invention are, not limitative: acetol, hydroxyacetone, dihydroxyacetone, benzoin, aryl substituted benzoins, furoin, 2-hydroxypropanal, gluconic acid , methyl gluconate, glucoronic acid, glyceric acid 3-hydroxybutanone.

The amount of vicinal dioxygen containing component in the composition may vary within rather wide ranges, and may be chosen depending on the kind of application in which the composition of the invention is applied. The skilled man easily can assess, in dependence of the type of application selected, which amount thereof leads to good results. It is convenient and operationally preferably to pre-form a concentrate (masterbatch) of the vicinal dioxygen containing component in an oxidizable carbon-containing component, which my be the same as, or different from, the oxidizable carbon-containing component to which it is to be added by dilution to the required concentration.

Preferably, the amount of vicinal dioxygen containing component in the composition is at least 0.0001 wt. %, preferably at least 0.01 wt. % and even more preferably at least 0.1 wt.%, calculated on the total weight of the composition. Preferably, the amount of vicinal dioxygen containing component in the composition is lower than 80 wt. %. The inventors have further found that the efficiency of oxygen-uptake is enhanced when the composition further contains an alkaline metal or earth alkaline metal salt or an ammonium salt. Preferably, the alkaline metal or earth alkaline metal salt is a K, Li or Na salt, preferably a K, Li or Na carboxylate. Generally, the carboxylates that can suitably be used in this preferred embodiment of the invention will be carboxylates having from 2 to 50 carbon atoms. Suitable carboxylates that can be used in this preferred embodiment of the present invention are, for instance, propionate, acetate, ethylhexanoate, lactate, butyrate. Also, for instance, stearates, palmitates, linoleates, linolenates, and oleates can suitably be used. Preferably the carboxylates used are carboxylates having at least 6 carbon atoms.

Preferably, the amount of the alkaline metal or earth alkaline metal salt or ammonium salt, if present, in the composition is at least 0.0001 wt. %, preferably at least 0.01 wt. % and even more preferably at least 0.1 wt. %, calculated on the total weight of the composition. Preferably, the amount of alkaline metal or earth alkaline metal salt or ammonium salt in the composition is lower than 50 wt. %.

The oxidisable carbon-containing component that can be used in the compositions of the invention is preferably an oxidisable carbon containing polymer. More preferably, the carbon-containing component are hydrocarbons that can degrade in an outdoor environment, primarily by an oxidative mechanism, to give, after complete biodegradation, mainly carbon dioxide and water. Preferred polymers are saturated polyolefins, for example polyethylene, polypropylene and their copolymers; styrene (co) polymers and its blends with polyunsaturated polymers; unsaturated polymers such as polydiene rubber, for example cis-polyisoprene (natural or synthetic); polybutadiene; styrene-butadiene; copolymers of unsaturated polymers with saturated polymers, such as acrylonitrile-butadiene-styrene (ABS); and block co-polymers, for example styrene-butadiene-styrene (SBS); and mixtures of the foregoing polymers.

In specifically preferred embodiments of the invention, the composition of the invention is essentially free of cobalt, most preferably free of cobalt. Essentially free of cobalt means that the cobalt concentration is lower than 10 ppm, preferably lower than 5 ppm and even more preferably lower than 1 ppm, calculated on the total weight of the composition. Even more preferably, the composition of the invention is essentially free of transition metal, most preferably free of transition metal. Essentially free of transition metals means that the transition metal concentration is lower than 10 ppm, preferably lower than 5 ppm and even more preferably lower than 1 ppm, calculated on the total weight of the composition.

To increase the processability and to adapt the life time of the oxidisable carbon containing polymer, stabilizers can be added. One class of stabilizers that can be added are the primary antioxidants like phenolic antioxidants and aromatic amines. Examples of these primary antioxidants are: 2,6-Di-t-butyl-4-methylphenol, 2,6-di-t-butyl-4-ethyl-phenol, Benzenepropanoic acid, 3,5-bis(1,1-dimethylethyl)-4-hydroxy-octadecyl ester, 2,2'-Methylenebis (6-t-butyl-4-methylphenol), 2,2'-Methylenebis 6-(1-methylcyclohexyl)-p-cresol, 4,4'-Butylidenebis (6-t-butyl-3-methylphenol), bis-(2-t-butyl-4-methyl-6-(3-t-butyl-5-methyl-2-hydroxy-benzyl)-phenyl)-terephtalate, 1,1,3-Tris (2-methyl-4-hydroxy-5-t-butyl phenyl) butane, 1,3,5-Trimethyl-2,4,6-tris (3,5-di-t-butyl-4-hydroxybenzyl) benzene, Butyric acid, 3,3-bis(3-t-butyl-4-hydroxyphenyl) ethylene ester, 1,3,5-Tris(3',5'-di-t-butyl-4'-hydroxybenzyl)-s-triazine-2,4,6-(1 H,3H,5H)trione, 1,3.5-Tris (4-t-butyl-2,6-dimethyl-3-hydroxy-bezyl)-isocyanurate, 3-(3,5-di-t-butyl-4-hydroxy-phenyl) propion acid ester with 1,3,5-tTris (2-hydroxy-ethyl)-iso-cyanurate , Tetrakis [methylene (3,5-di-t-butyl-4-hydroxyhydrocinnamate)] methane, N,N'-Hexamethylene bis (3,5-di-t-butyl-4-hydroxyhydrocinnamamide, 3,9-bis(1,1-dimethyl-2-((3-(3-t-butyl-4-hydroxy-5-methyl-phenyl)-propyonyl-oxy)-ethyl)-2,4,8,10-tetraoxospiro, 2,2'-Ethylidenebis (4,6-di-t-butylphenol), 4,4'-Methylenebis (2,6-di-t-butylphenol), tri-ethylene-glycol-bis-3-(t-butyl-4-hydroxy-5-methyl-phenyl)-propionate, 1,6-hexane-diol-bis-3-(3,5-di-t-butyl-4-hydroxyphenyl)-propionate, Butylated hydroxyanisole, 2,6-di-t-butyl-4-sec-butylphenol, 2-propyleneacid, 2-isopentane6[(3-isopentane-2-hydroxy-5-isopentane-phenyl)-ethyl]-4- methyl-phenyl-ester 2-propylene-acid,2-t-butyl-6-[(3-t-butyl-2-hydroxy-5-methyl-phenyl)-methyl]-4-methyl-phenyl-ester, p-Cresol/dicyclopentadiene butylated reaction product , di-ethyl-ester of 3,5-di-t-butyl-4-hydroxy-benzyl-phosphoric acid , 2,5,7,8-tetra-methyl-2-(4',8',12'-tri-methyl-tri-decyl)-6-chromanol , N,N'-1,3-Propanediylbis(3,5-di-t-butyl-4-hydroxyhydrocinnamamide, Calcium bis[monoethyl(3,5-di-t-butyl-4-hydroxybenzyl)phosphonate, 4,4'-Di-cumyl-di-phenyl-amine and 2,2,4-Trimethyl-1,2-dihydroquinoline polymer.

Another class of stabilizers that can be added are the secondary antioxidants like the phosphites and the thioethers. Examples of these secondary antioxidants are: Trisnonylphenyl phosphite, Tris (2,4-di-t-butylphenyl) phosphite, 2,2-Methylene-bis-(4,6-di-tbutyl-phenyl)-octyl-phosphite, 2,2'-Ethylidenebis (4,6-di-t-butylphenyl) fluorophosphonite, Bis(2,4-di-tert-butyl-6-methylphenyl) ethyl phosphite, 2,4,6 Tri-t-butylphenyl-2-butyl-2-ethyl-1,3-propane-diol-phosphite, Distearyl pentaerythritol diphosphite, Tetrakis-(2,4-di-tert-butyl-phenyl)-4,4'-bi-phenylene-di-phosphonite, Bis (2,4-di-t-butylphenyl) pentaerythritol diphosphite, Bis-(2,6-di-tbutyl-4-methyl-phenyl)-pentaerythritol-di-phosphite, Bis-(2,4-dicumylphenyl)-pentaerytritol-diphosphite, 1,3-Bis-(diphenylphosphino)-2,2-dimethyl-propane, 2,2',2"-Nitrilo triethyl-tris[3,3',5,5'-tetratert-butyl-1,1'-biphenyl-2,2'-diyl]phosphite, Dilauryl thiodipropionate, Dimyristyl thiodipropionate, Distearyl thiodipropionate, Distearyl disulfide and Pentaerythrityl tetrakis (β-laurylthiopropionate)

To regulate the life time in outdoor conditions, UV stabilizers like UV absorbers and Hindered Amine stabilizers can be added to the oxidisable carbon containing polymer. Examples of the UV-absorbers are hydroxy-benzophenones like 2-Hydroxy-4-n-octoxybenzophenone, 2-Hydroxy-4-n-dodecyloxy-benzophenone; Hydroxy-benzotriazoles like: 2-(2'-Hydroxy-3'-t-butyl-5'-methylphenyl)-5-chlorobenzotriazole, 2-(2-Hydroxy-5-t-octylphenyl) benzotriazole, Bis[2-hydroxy-5-t-octyl-3-(benzotriazol-2-yl)phenyl]methane, 2-[2-Hydroxy-3,5-di(1,1-dimethylbenzyl)phenyl]2H-benzotriazole and other types like the oxalanilides, hydroxybenzoates, diphenylacrylates and hydroxytriazines. Examples of the HALS stabilizers are: alkylsubstituted piperidyl-, piperidinyl- or piperazinone containing compounds as e.g.: 2,2,6,6-tetramethyl-4-piperidone, 2,2,6,6-tetrametyl-4-piperidinol,bis-(1,2,2,6,6-pentamethylpiperidyl)-(3',5'-di-tert-butyl-4'-hydroxybenzyl)-butylmalonate, di-(2,2,6,6-tetramethyl-4-piperidyl)-sebacate, Dimethyl succinate polymer with 4-hydroxy-2,2,6,6-tetramethyl-1-piperidine ethanol, Poly[[6-[(1,1,3,3-tetramethylbutyl)amino]-s-triazine-2,4-diyl][2,2,6,6-tetramethyl-4-piperidinyl)imino]hexamethylene [(2,2,6,6-tetramethyl-4-piperidinyl) imino]]}, bis-(2,2,6,6-tetramethyl-4-piperidinyl)-succinate, bis-(1-octyloxy-2,2,6,6-tetramethyl-4-piperidinyl)-sebacate, bis-(1,2,2,6,6-pentamethyl-4-piperidinyl)-sebacate, tetrakis-(2,2,6,6-tetramethyl-4-piperidyl)-1,2,3,4-butaan-tetracarboxylate, N,N'-bis-(2,2,6,6-tetramethyl-4-piperidyl)-hexane-1,6-diamine,- N-butyl-2,2,6,6-tetramethyl-4-piperidinamine, 2,2'-[(2,2,6,6-tetramethyl-piperidinyl)-imino]-bis-[ethanol], poly((6-morfoline-S-triazine-2,4-diyl)(2,2,6,6-tetramethyl-4-piperidinyl)-iminohexamethyleen-(2,2,6,6-tetramethyl-4-piperidinyl)-imino), 5-(2,2,6,6-tetramethyl-4-piperidinyl)-2-cyclo-undecyl-oxazole),1,1'-(1,2-ethaan-di-yl)-bis-(3,3',5,5'-tetramethyl- piperazinone),- 8-acetyl-3-dodecyl-7,7,9,9-tetramethyl-1,3,8-triazaspiro(4,5)decaan-2,4-dion, polymethylpropyl-3-oxy-[4(2,2,6,6-tetrametyl)-piperidinyl)-siloxane, 1,2,3,4-butane-tetracarboxylzuur-1,2,3-tris(1,2,2,6,6-pentamethyl-4-piperidinyl)-4-tridecylester, copolymer of alfa-methylstryrene-N-(2,2,6,6-tetramethyl-4-piperidinyl)maleimide and N-stearyl-maleimide, N-2,2,6,6-tetrametyl-4-piperidinyl-N-amino-oxamide, 4-acryloyloxy-1,2,2,6,6-pentamethyl-4-piperidine, mixtures of esters of 2,2,6,6-tetramethyl-4-piperidinol and fatty acids, 1,5,8,12-tetrakis[2',4'-bis(1",2",2",6",6"-pentamethyl-4"-piperidinyl(butyl)amino)-1',3',5'-triazin-6'-yl]-1,5,8,12-tetraazadodekane,

The composition containing the oxidisable carbon containing component might further contain: Fillers selected from the inorganic carbonates, synthetic carbonates, nepheline syenite, talc, magnesium hydroxide, aluminium trihydrate, diatomaceous earth, mica, natural or synthetic silicas and calcinated clays or mixtures thereof, preferable having a particle size of less than 150 mesh; photoinitiators as e.g. benzophenone. Other degradable components such starch or poly (lactic acid), poly (caprolactone), poy (hydoxybutyrate and/or valerate), poly (ethylenedipate); pigments as e.g. carbon black and titanium dioxide

The composition containing the oxidisable carbon-containing component and the vicinal dioxygen containing component can be prepared by mixing the oxidisable carbon-containing component with the vicinal dioxygen containing component in a separate step or in a step in the process of manufacturing the oxygen scavenging object. This mixing can be conducted in the equipment known in the art such as extruders and mixers. The process applies melt-mixing, i.e. the mixing takes place above the melting point of the oxidisable carbon-containing component but below its decomposition temperature.

The present invention further also relates to a method for increasing the biodegradability of an oxidizable carbon-containing component by blending the component with a vicinal dioxygen containing component. The oxidizable carbon-containing component, the vicinal dioxygen containing component and possible other additives are described in detail in the foregoing parts of the specification, which description does not need to be repeated here.

The present invention further also relates to the use of the composition of the invention for the preparation of a product having a controlled lifetime, like for example food packaging, bags (bread, shopping, compost, courier, garbage, poop scoop for pets), bottles, boxes, containers, cups, plastic drink holders and trays, films (blown, cast, shrink, thermoforming, laminated, cling), cutlery, drinking straws, agricultural films (mulch films, greenhouse films), landfill cover, medical and hygienic products (adult incontinence pads, diapers, femine hygiene pads).

The invention is now demonstrated by means of a series of examples and comparative examples. All examples are supportive of the scope of claims. The invention, however, is not restricted to the specific embodiments as shown in the examples.

### Experimental part

### Preparation of compounds

Different oxidation catalysts were added to a polypropylene powder by solvent blending (adding the additives as a solution followed by evaporation of the solvent).

### Examples I-V and Comparative Experiments A-B: Determination of the effectivity of the catalysts.

The effectivity of the catalysts on the oxygen uptake rate of the PP compounds was determined. In a vessel of 65 ml, to which a pressure transducer was connected, 1 gram polymer powder was brought into contact with an atmosphere containing 100% oxygen. The drop of the pressure in the vessel at 50°C was recorded. From the drop in pressure, the oxygen uptake was calculated.

As a measure of the activity of the catalysts, the time to an oxygen uptake of 50 mmol/kg was determined. The results are shown in Table 1.

**Table 1**

| Example | Catalyst. | Amount (wt%) | Co-catalyst | Amount (mmol/kg) | Time to an oxygen uptake of 50 mmol/kg (hrs) |
|---|---|---|---|---|---|
| I | 1-Phenyl-1,2-propanedion | 1 | Potassium octanoate | 3 | 25 |
| II | Benzoin | 1 | Potassium octanoate | 3 | 36 |
| III | Hydroxyaceton | 1 | Potassium octanoate | 3 | 220 |
| IV | Methyl benzoylformate | 1 | Potassium octanoate | 3 | 135 |
| V | diacetone keto gulonic acid | 1 | Potassium octanoate | 3 | 360 |
| | | | | | |
| | | | | | |
| A | - | - | - | - | >1000 |
| B | Cobalt-acetate | 0.1 | | | >120 |

The examples and comparative experiments clearly demonstrate the oxygen uptake capacity of compositions according to the invention. Furthermore they clearly demonstrate the enhanced efficiency which can be obtained by adding a cocatalyst according to the invention. In addition, it is shown that the use of certain vicinal dioxygen containing components even results in that the oxygen scavenging properties of the composition are more efficient, i.e. the rate of oxygen-uptake is higher, compared to the use of a cobalt compound as oxidation catalyst.

### Examples VI and Comparative Experiment C

For some samples after 5 days (120 hrs) in oxygen at 50°C the solution viscosity in decalin at 135°C was measured. The results are shown in table 2. The solution viscosity of the not exposed samples was 1.58 dg/ml.

**Table 2**

| Example | Catalyst. | Amount (wt%) | Co-catalyst | Amount (mmol/kg) | solution viscosity (dg/ml) after 5 days exposure |
|---|---|---|---|---|---|
| VI | 1-Phenyl-1,2-propanedion | 1 | Potassium octanoate | 3 | 1.08 |
| C | - | - | - | - | 1.58 |
| D | Cobalt-acetate | 0.1 | | | 1.49 |

From example VI it can be derived that the viscosity of the composition of the invention, and thus the molecular weight of the polypropylene, decreases with high rate.

## Claims

1. Composition containing an oxidisable carbon-containing component, **characterized in that** the composition further contains a vicinal dioxygen containing component.

2. Composition according to claim 1, **characterized in that** the vicinal dioxygen containing component contains at least one 1,2-dioxo-moiety according to formula I 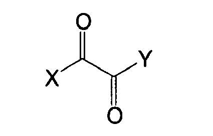 with X and Y being identical or different from each other, and representing respectively:
X, Y: OR, SR, NR₁R₂, R, O⁻M⁺;
R, R₁, R₂: a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or polymeric residue.

3. Composition according to claim 2, **characterised in that** X and/or Y being R.

4. Composition according to claim 2, **characterised in that** X and Y being R.

5. Composition according to claim 2, **characterised in that** X or Y being an optionally substituted C₆-C₂₀ aryl group or an optionally substituted C₇-C₂₀ arylalkyl group.

6. Composition according to claim 2, **characterised in that** X is an optionally substituted C₁-C₂₀ alkyl group and Y is an optionally substituted C₆-C₂₀ aryl group.

7. Composition according to claim 2, **characterised in that** X is OH or an optionally substituted O-C₁-C₂₀ alkyl group and Y is an optionally substituted C₆-C₂₀ aryl group.

8. Composition according to claim 2, **characterised in that** X and/or Y is an O⁻M⁺, with M⁺ representing an alkaline metal or earth alkaline metal cation, or an ammonium ion.

9. Composition according to claim 1, **characterized in that** the vicinal dioxygen containing component contains at least one 1,2-oxo-hydroxy moiety according to formula II 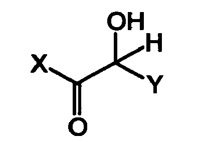 with X and Y being identical or different from each other, and representing respectively:
X: OR, SR, NR₁R₂, R, O⁻M⁺ ; Y: OR, SR, NR₁R₂, R;
R, R₁, R₂ : a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or a polymeric residue.

10. Composition according to claim 9, **characterised in that** X being R.

11. Composition according to claim 9, **characterised in that** X and/or Y being an optionally substitiuted C₆-C₂₀ aryl group or an optionally substituted C₇-C₂₀ arylalkyl group.

12. Composition according to claim 9, **characterised in that** X is an optionally substituted C₁-C₂₀ alkyl group and Y is an optionally substituted C₆-C₂₀ aryl group.

13. Composition according to claim 9, **characterised in that** X is OH, with the proviso that in case the vicinal dioxygen containing component is citric acid or tartaric acid the composition is essentially free of transition metal.

14. Composition according to claim 9, **characterised in that** X is an optionally substituted OC₁-C₂₀ alkyl group and Y an optionally substituted C₆-C₂₀ aryl group.

15. Composition according to claim 9, **characterised in that** X is an O- M⁺, with M⁺ representing an alkaline metal or earth alkaline metal cation, or an ammonium ion.

16. Composition according to any one of claims 1-15, **characterised in that** the composition further contains an alkaline metal or earth alkaline metal salt, or an ammonium salt.

17. Composition according to any one of claims 1-15, **characterised in that** the composition further contains a K, Li or Na salt, preferably K, Li or Na carboxylate.

18. Composition according to any one of claims 1-17, **characterized in that** the oxidisable carbon-containing component is an oxidisable carbon-containing polymer.

19. Composition according to any one of claims 18, **characterised in that** the carbon containing polymer is a polymer capable of degrading by an oxidative mechanism to form carbon dioxide and water.

20. Composition according to any one of claims 1-19, **characterized in that** the oxidisable carbon-containing component is a polymer mainly containing carbon and hydrogen.

21. Composition according to any one of claims 1-20, **characterised in that** the carbon containing component is a polyolefin and/or polystyrene.

22. Composition according to claim 21, wherein said polyolefin is selected from the group consisting of polyethylene, polypropylene and their copolymers and blends.

23. Composition according to any one of claims 1-22, **characterised in that** the composition is essentially free of cobalt.

24. Method for increasing the biodegradability of an oxidizable carbon-containing component, **characterized in that** the method comprises blending the component with a vicinal dioxygen containing component.

25. Method according to claim 24, **characterized in that** the vicinal dioxygen component is the vicinal dioxygen containing component contains at least one 1,2-dioxo moiety according to formula I or at least one 1,2-oxo-hydroxy moiety according to formula II.

26. Method according to claim 24 or 25, **characterized in that** the method further comprises blending an alkaline metal or earth alkaline metal salt.

27. Method according to any one of claims 24-25, **characterised in that** the method further comprises blending a K, Li or Na salt, preferably K, Li or Na carboxylate.

28. Method according to any one of claims 24-27, **characterised in that** the carbon containing component is a polymer capable of degrading by an oxidative mechanism to form carbon dioxide and water.

29. Method according to any one of claims 24-28, **characterized in that** the oxidisable carbon-containing component is a polymer mainly containing carbon and hydrogen.

30. Method according to any one of claims 24-29, **characterised in that** the carbon containing component is a polyolefin and/or polystyrene.

31. Method according to claim 30, wherein said polyolefin is selected from the group consisting of polyethylene, polypropylene and their copolymers and blends.

32. Use of the composition according to any one of claims 1-23 for the preparation of a product having a controlled lifetime.

33. Use of the composition obtained with the method according to anyone of claims 24-31 for the preparation of a product having a controlled lifetime.

34. Use of the composition according to any one of claims 1-23 or of the composition obtained with the method according to anyone of claims 24-31 for the preparation of food packaging, bags, bottles, boxes, containers, cups, plastic drink holders and trays, films, cutlery, drinking straws, agricultural films, landfill cover, medical and hygienic products.

35. A molded, extruded, cast or blown polymeric product made from the composition of anyone of claims 1-24.

36. A film obtained from the composition of anyone of claims 1-24.
